# EUROPEAN PATENT SPECIFICATION

(11) **EP 4 509 260 B1**
(45) Date of publication and mention of the grant of the patent: **18.02.2026**
(21) Application number: 24151630.1
(22) Date of filing: 12.01.2024
(51) Int. Cl.: B23Q 3/155

(54) **TOOL CHANGING MECHANISM FOR MACHINING APPARATUS**
WERKZEUGWECHSELVORRICHTUNG FÜR EINE BEARBEITUNGSVORRICHTUNG
MÉCANISME DE CHANGEMENT D'OUTIL POUR APPAREIL D'USINAGE

(30) Priority: 18.08.2023 TW 112131125
(43) Date of publication of application: 19.02.2025
(73) Proprietor: Sanjet International Co., Ltd., Daya Dist. Taichung City 428 (TW)
(72) Inventor: CHANG, CHING-SAN, 428 Taichung City (TW)
(74) Representative: Cabinet Chaillot

(56) References cited:
- EP-A1- 3 321 031
- TW-A- 201 125 679

## Description

### BACKGROUND OF THE INVENTION

### Technical Field

The present invention relates generally to an automatic tool changing mechanism, and more particularly to a tool changing mechanism applicable to both vertical and horizontal machining apparatuses.

### Description of Related Art

An automatic tool changing mechanism for a machining apparatus is mainly used to transfer tools required for machining from a tool magazine to a clamping mechanism of a spindle. Such a tool changing mechanism is known e.g. from Patent Document TW 201 125 679 A.
The machining apparatus can be divided into two kinds, including a vertical machining apparatus and a horizontal machining apparatus, according to a way to mount the spindle. Alternatively, a vertical and horizontal dual-purpose machining apparatus can be realized by replacing a spindle chuck.

A tool changing arm of a tool changing mechanism applied to the vertical and horizontal dual-purpose machining apparatus must be controllable to pivot and displace between two fixed points to adapt to different tool changing ways, wherein the two fixed points are typically in swinging directions of a rotating shaft of the tool changing arm, i.e., in a vertical direction and a horizontal direction. Therefore, a tool clamping structure located at two ends of the tool changing arm is required to have a reliable and stable locking and loosening way and to be controllable to perform different functions, especially in a tool changing process of horizontal machining.

A known way for controlling the tool clamping structure is to provide a complex oil channel inside the tool changing arm and to control an injection of hydraulic oil by activating or closing a solenoid valve for achieving the purpose of independently controlling locking or loosening of the tool. However, the cost is increased due to the solenoid valve and the oil channel, and production difficulties arise due to the more complex structure. Therefore, the conventional tool changing mechanism still has room for improvement.

### BRIEF SUMMARY OF THE INVENTION

In view of the above, the primary objective of the present invention is to provide a tool changing mechanism for a machining apparatus, which could reduce the cost and be easy to produce.

The present invention provides a tool changing mechanism for a machining apparatus, including a body, a tool changing arm, and a detent unit. The tool changing arm includes an arm and a rotating shaft. The arm has two different ends. Two tool clamping assemblies are respectively provided at the two ends of the arm. Each of the two tool clamping assemblies includes at least one clamping member. The at least one clamping member has two ends respectively constituting an actuating end and a tool-abutting end. An end of the rotating shaft is connected to the arm, and another end of the rotating shaft penetrates through the body. The rotating shaft is controllable to drive the arm to rotate around a centerline. The detent unit includes a movable cylinder and two detent rods. The movable cylinder sleeves the rotating shaft and is movable along the centerline between a first position and a second position. The movable cylinder has an annular top surface, wherein the annular top surface is divided into a high section and a low section located lower in height than the high section. The two detent rods are disposed on an outer side of the rotating shaft in a manner that the two detent rods are movable in parallel to the centerline. The two detent rods are rotatable around the rotating shaft along with the rotation of the arm. Each of the two detent rods has two ends respectively constituting an abutting end and a pushing end.

When the movable cylinder is in the first position, the abutting end of at least one of the two detent rods does not contact the annular top surface. When the movable cylinder is in the second position, the abutting end of one of the two detent rods contacts the high section of the annular top surface and the pushing end of the detent rod pushes against the actuating end of the at least one clamping member of one of the two tool clamping assemblies, and the abutting end of the other detent rod contacts the low section of the annular top surface and the pushing end of the other detent rod does not push against the actuating end of the at least one clamping member of the other tool clamping assembly.

An effect of the present invention is in that by taking advantage of the feature that the high section and the low section of the annular top surface have a difference in height, locking and loosening the tool shanks could be performed at the same time during the tool changing process.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the machining apparatus including the tool changing mechanism according to an embodiment of the present invention;
FIG. 2 a side view of the machining apparatus shown in FIG. 1, showing that the tool changing mechanism in the machining apparatus is in the vertical position;
FIG. 3 is a side view of the machining apparatus shown in FIG. 1, showing that the tool changing mechanism in the machining apparatus is in the horizontal position;
FIG. 4 is an exploded view of the tool changing mechanism according to the embodiment of the present invention;
FIG. 5 is an exploded view of the tool changing arm and a part of the detent unit of the tool changing mechanism shown in FIG. 4;
FIG. 6 is a sectional schematic view of the tool changing arm of the tool changing mechanism shown in FIG. 4;
FIG. 7 is a sectional view along the 7-7 line in FIG. 6;
FIG. 8 is an exploded view of the part of the detent unit of the tool changing mechanism shown in FIG. 4;
FIG. 9 is a side view of the shaft tube in the detent unit shown in FIG. 8;
FIG. 10 is an exploded view of the part of the detent unit shown in FIG. 8;
FIG. 11 is a top view of the movable cylinder of the detent unit shown in FIG. 10;
FIG. 12 is a top view of the tool changing mechanism of the machining apparatus shown in FIG. 2.
FIG. 13 is a sectional view along the 13-13 line in FIG. 12, showing that the tool changing mechanism is in the vertical position, and the movable cylinder of the detent unit is in the first position;
FIG. 14 is a sectional view along the 14-14 line in FIG. 13;
FIG. 15 is similar to FIG. 13, showing that the movable cylinder of the detent unit is in the second position;
FIG. 16 is a sectional view along the 16-16 line in FIG. 15; and
FIG. 17 is a sectional schematic view, showing that the tool changing mechanism is in the horizontal position and the movable cylinder in the detent unit is in the second position.

### DETAILED DESCRIPTION OF THE INVENTION

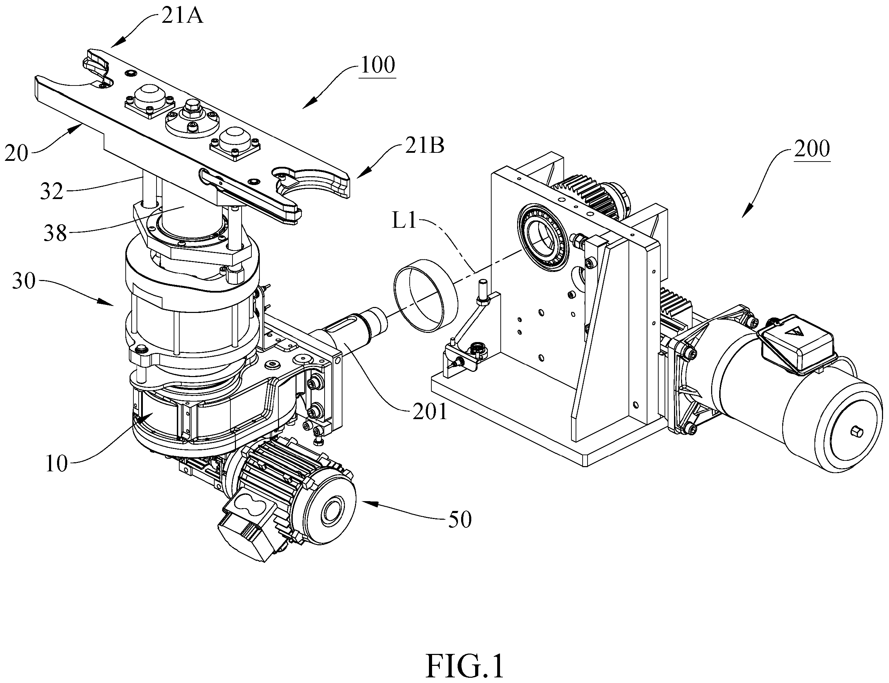

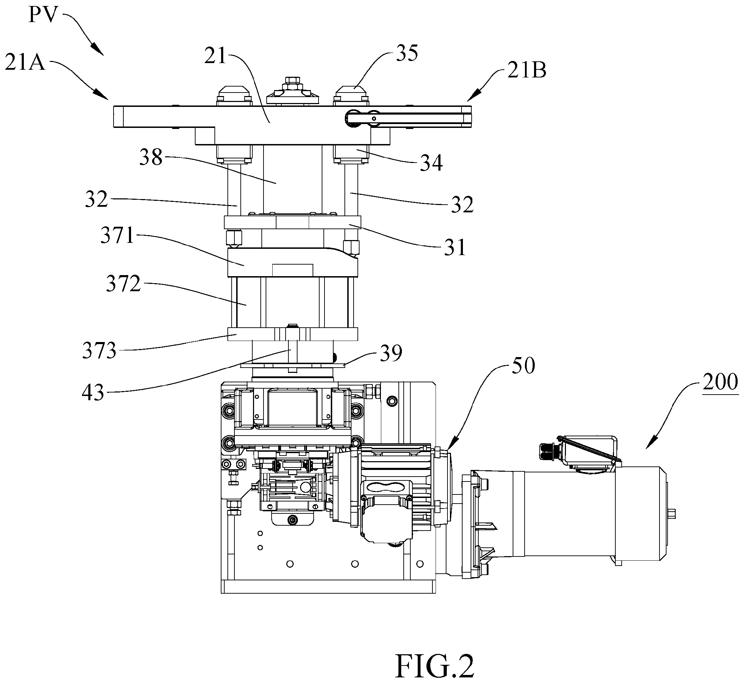

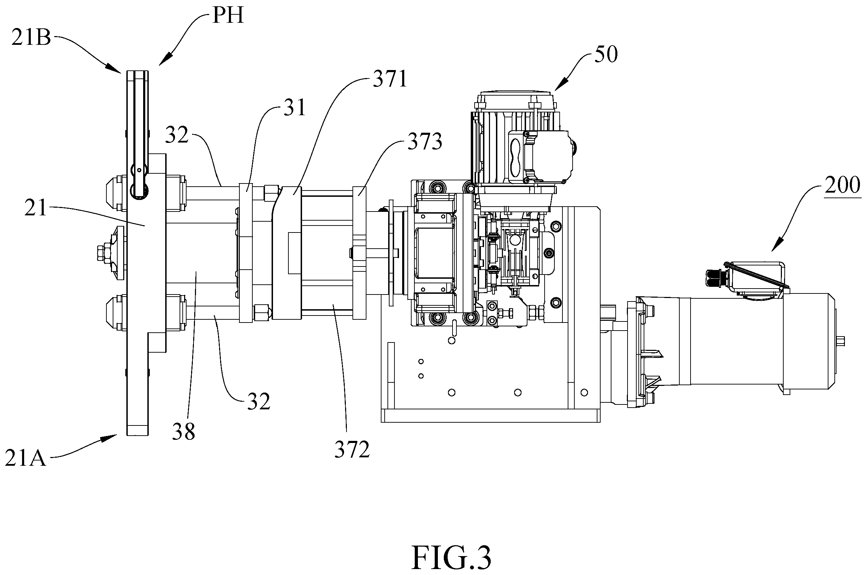

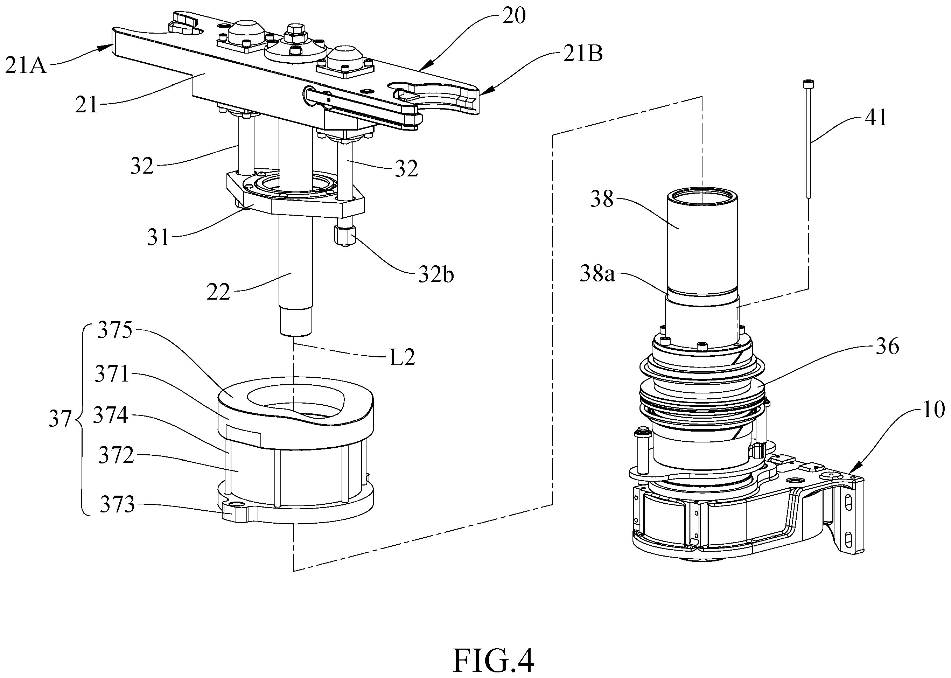

A tool changing mechanism 100 according to an embodiment of the present invention is illustrated in FIG. 1 to FIG. 4 and is applied to a vertical and horizontal dual-purpose machining apparatus as an example, wherein the tool changing mechanism 100 is adapted to exchange a tool on a spindle of the machining apparatus with a tool in a tool magazine. The tool changing mechanism 100 could be driven by a driving mechanism 200 to pivot between a vertical position PV shown in FIG. 2 and a horizontal position PH shown in FIG. 3 with an axis L1 as a center. In the current embodiment, the tool changing mechanism 100 includes a body 10, a tool changing arm 20, a detent unit 30, and a motor 50, wherein the body 10 is connected to a rotating shaft 201 of the driving mechanism 200. The rotating shaft 201 of the driving mechanism 200 has the axis L1, wherein the axis L1 passes through the body 10. The rotating shaft 201 of the driving mechanism 200 is controlled to rotate to synchronously drive the tool changing mechanism 100 to pivot. Because the driving mechanism 200 is not a key point of the present invention, the driving mechanism 200 is not described here.

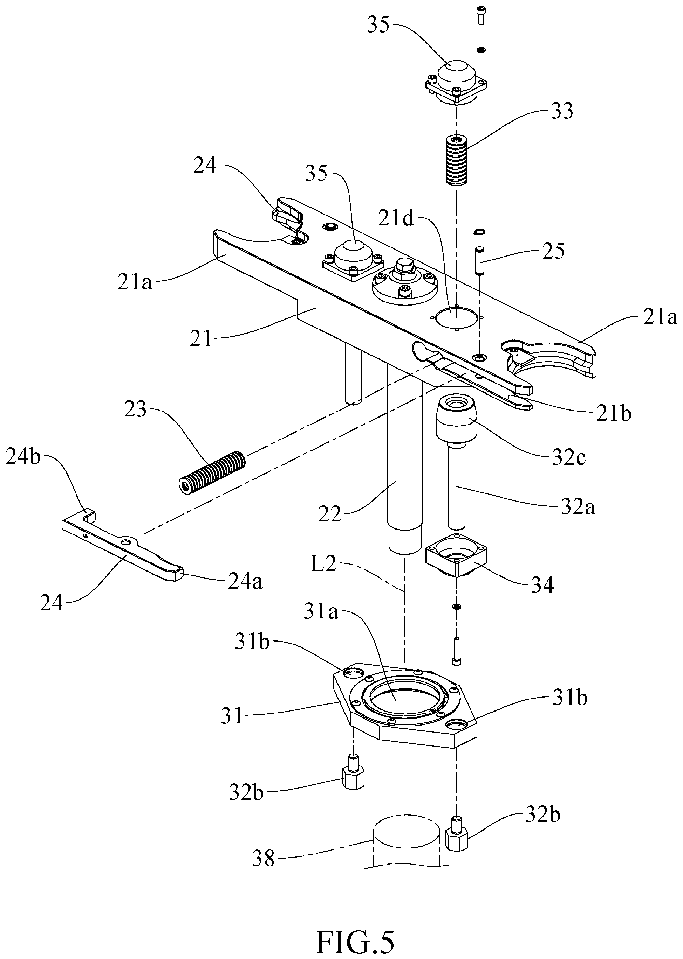

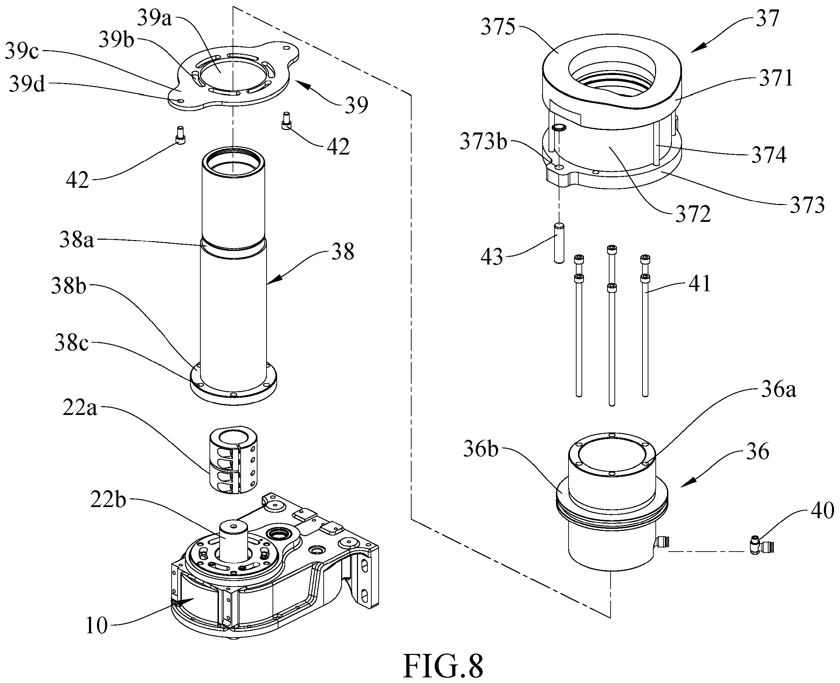

Referring to FIG. 5 to FIG. 7, the tool changing arm 20 includes an arm 21 and a rotating shaft 22. Two tool clamping assemblies are respectively provided at two different ends of the arm 21. An end of the rotating shaft 22 of the tool changing arm 20 is fixedly connected to a central part of the arm 21, and another end of the rotating shaft 22 of the tool changing arm 20 is fixedly connected to a coupling shaft 22b through a coupling sleeve 22a (shown in FIG. 8) to penetrate through the body 10. The motor 50 is engaged with the body 10 and is adapted to control the rotating shaft 22 of the tool changing arm 20 to drive the arm 21 to rotate with a centerline L2 as a center.

The two ends of the arm 21 are respectively a tool clamping portion 21A with an opening facing outward and a tool clamping portion 21B with an opening facing outward. Each of the tool clamping portions 21A, 21B has a tool clamping plate 21a that is integrally formed (i.e., the tool clamping plate 21a of the tool clamping portion 21A and the tool clamping plate 21a of the tool clamping portion 21B are integrally formed) and is provided with a lateral groove 21b on an opposite side to the tool clamping plate 21a. A bottom of the lateral groove 21b is horizontally provided at with an accommodating hole 21c which does not penetrate through the arm 21. In addition, two sides of the arm 21 located at a junction between the arm 21 and the rotating shaft 22 of the tool changing arm 20 are respectively provided with a penetrating hole 21d vertically penetrating through a top surface and a bottom surface of the arm 21. Each of the tool clamping assemblies includes an elastic member 23, a clamping member 24, and a shaft pin 25, wherein the elastic member 23 is in one of the accommodating holes 21c in advance, the clamping member 24 is placed in one of the lateral grooves 21b, and the shaft pin 25 passes through the arm 21 and the clamping member 24, so that the clamping member 24 is swingable around the shaft pin 25 as a fulcrum. The clamping member 24 is divided by the shaft pin 25 into two ends, wherein an end of the clamping member 24 constitutes a tool-abutting end 24a, and another end of the clamping member 24 constitutes an actuating end 24b. An end of the elastic member 23 abuts against a bottom of the accommodating hole 21c, and another end of the elastic member 23 abuts against a part of the clamping member 24 between the shaft pin 25 and the actuating end 24b. An elastic force provided by the elastic member 23 acts on the clamping member 24, so that the tool-abutting end 24a of the clamping member 24 maintains leaning toward the tool clamping plate 21a.

When a tool shank T engaged with a tool enters or exits a clamping space S formed between the tool clamping plate 21a and the tool-abutting end 24a of the clamping member 24, the tool shank T touches and pushes the tool-abutting end 24a to slightly swing the clamping member 24, so that the tool shank T could enter or exit the clamping space S smoothly. After the tool shank T enters the clamping space S, the tool-abutting end 24a of the clamping member 24 abuts against and clamps the tool shank T through the elastic force of the elastic member 23, so that the tool shank T is clamped stably. The aforementioned way of clamping the tool shank T is achieved by the integrally formed tool clamping plate 21a and the clamping member 24 that is swingable. However, in practice, the number of the lateral groove at one end of the arm could be two, wherein the two lateral grooves are disposed in a symmetrical manner; the number of the clamping member could be two, wherein each of the clamping members is pivotally connected in each of the lateral grooves; the tool shank could be clamped between the two clamping members.

The detent unit 30 includes a rotary table 31, two detent rods 32, two restoring members 33, two bottom covers 34, and two top covers 35, wherein the rotary table 31 sleeves the rotating shaft 22 in a manner that the rotary table 31 maintains at a same height position, and the rotary table 31 is rotatable around the rotating shaft 22. In the current embodiment, the rotary table 31 has a hollow portion 31a and two through holes 31b located on two sides of the hollow portion 31a of the rotary table 31. Each of the two detent rods 32 includes a rod body 32a, a connector 32b, and a detent block 32c. An end of each of the two rod bodies 32a passes through each of the bottom covers 34 and then each of the through holes 31b of the rotary table 31 to be connected to the connector 32b, and another end of each of the two rod bodies 32a is connected to the detent block 32c. The bottom covers 34 are fixedly connected to the bottom surface of the arm 21, so that the detent block 32c of each of the rod bodies 32a is positioned in each of the penetrating holes 21d of the arm 21. The connector 32b and the detent block 32c at two ends of each of the detent rods 32 are located on two sides of the rotary table 31, respectively, wherein the detent block 32c is defined as a pushing end of the present invention, and the connector 32b is defined as an abutting end of the present invention. In addition, the connector 32b and the detent block 32c are connected to the rod body 32a in a detachable manner, so that the connector 32b and the detent block 32c are replaceable.

The two restoring members 33 are springs and are respectively provided in the penetrating holes 21d. The two top covers 35 are fixedly connected to the top surface of the arm 21 and restrict one of the restoring members 33 in one of the perforating holes 21d, respectively. A pushing force provided by each of the restoring members 33 acts on one of the detent rods 32, so that each of the detent rods 32 maintains movement in an outward direction. It can be seen from the above that the two detent rods 32 that are assembled are disposed on an outer side of the rotating shaft 22 of the tool changing arm 20 through the rotary table 31 in a manner that the detent rods 32 are movable in parallel to the centerline L2. When the arm 21 is rotated, the arm 21 drives the two detent rods 32 along with the rotary table 31 to rotate around the rotating shaft 22 of the tool changing arm 20.

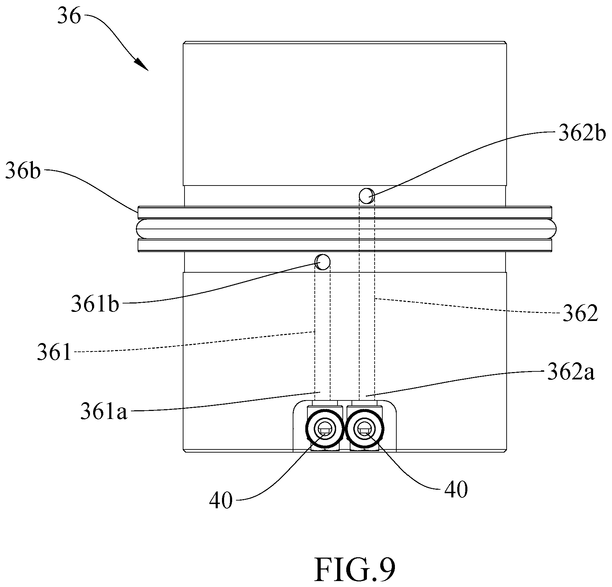

As shown in FIG. 8, the detent unit 30 further includes a shaft tube 36, a movable cylinder 37, a supporting tube 38, and a guiding disk 39. The shaft tube 36 is mounted inside the movable cylinder 37. In order to illustrate easily, the shaft tube 36 is described first, and the movable cylinder 37 is described later. The shaft tube 36 has a plurality of through holes 36a penetrating through a top surface and a bottom surface of the shaft tube 36. An annular protrusion 36b is formed by radially protruding from an outer peripheral surface of the shaft tube 36. As shown in FIG. 9, a channel 361 and a channel 362 that do not communicate with each other are provided inside the shaft tube 36. The channel 361 has a first port 361aand a second port 361b respectively at two ends of the channel 361, and the channel 362 has a first port 362a and a second port 362b respectively at two ends of the channel 362. The first port 361a of the channel 361 and the first port 362a of the channel 362 are located at a bottom of the shaft tube 36 and could respectively communicate with an external pressure source (not shown) through a connecting piece 40. The second port 361b of the channel 361 and the second port 362b of the channel 362 are formed on the outer peripheral surface of the shaft tube 36 and are located on two sides of the annular protrusion 36b, respectively.

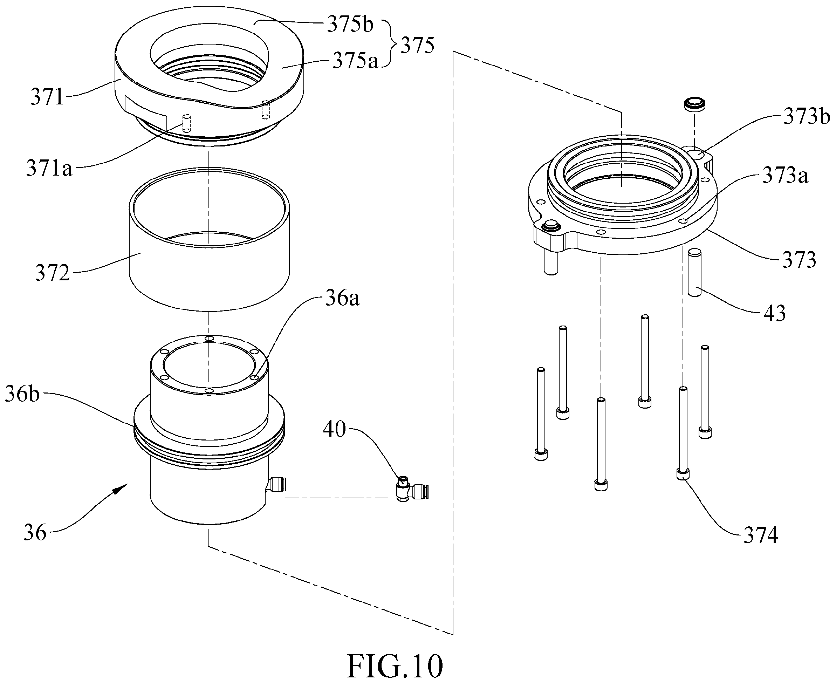

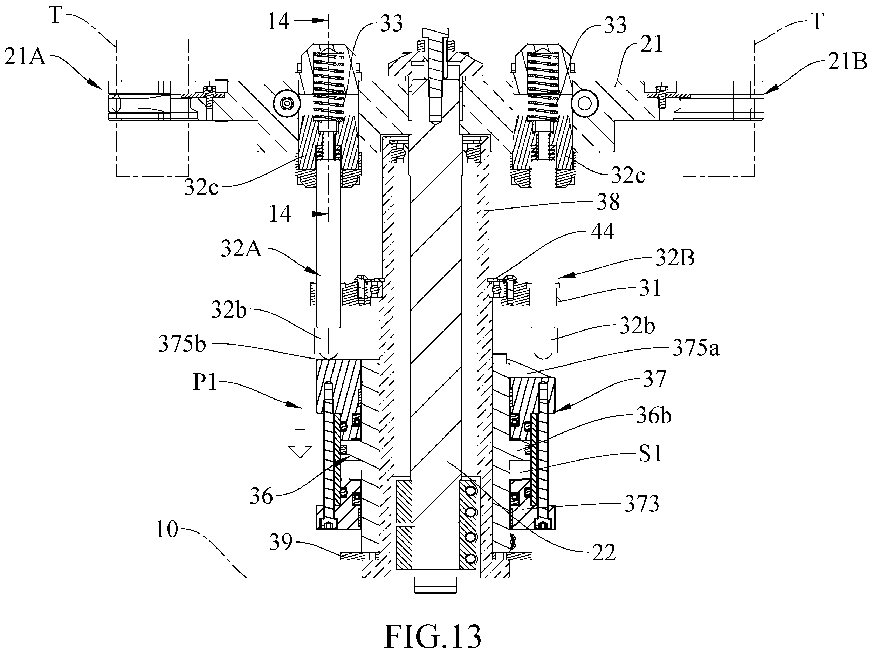

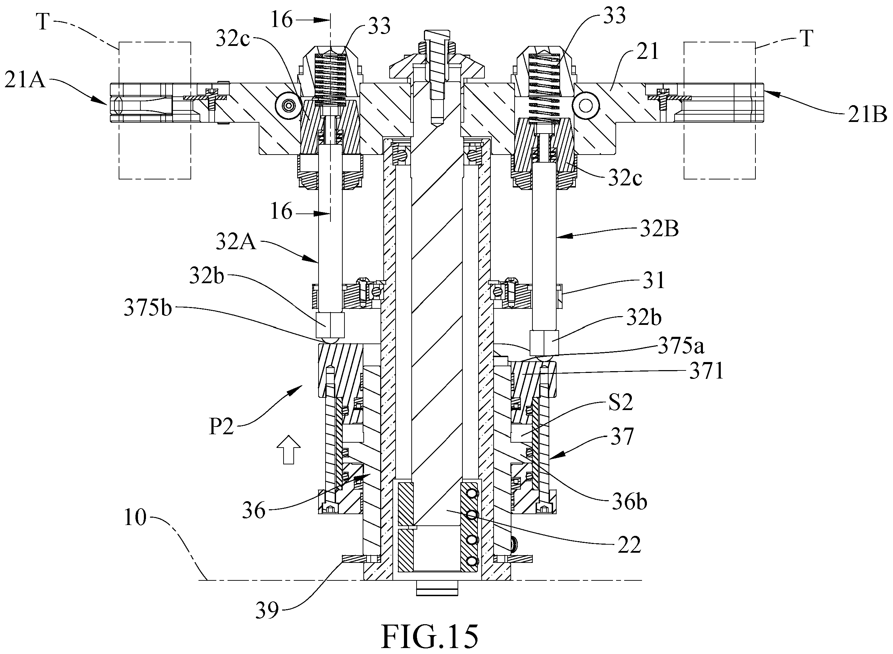

The movable cylinder 37 is movable relative to the shaft tube 36 along the centerline L2. Referring to FIG. 10, in the current embodiment, the movable cylinder 37 includes a liftable base 371 that is circular, a cylinder tube 372, and a guiding cover 373. During assembling, the cylinder tube 372 sleeves the shaft tube 36, then the cylinder tube 372 is clamped between the liftable base 371 and the guiding cover 373, and a plurality of screws 374 respectively passes through a plurality of perforations 373a in the guiding cover 373 and then are correspondingly screwed into a plurality of screw holes 371a of the liftable base 371, so that the cylinder tube 372 is fixedly connected between the liftable base 371 and the guiding cover 373. At the same time, an interior of the movable cylinder 37 is divided by the annular protrusion 36b of the shaft tube 36 into a first space S1 (shown in FIG. 13) and a second space S2 (shown in FIG. 15) that do no communicate with each other, i.e., the first space S1 is formed by a space between the guiding cover 373 and the annular protrusion 36b, and the second space S2 is formed by a space between the liftable base 371 and the guiding cover 36b. The second port 361b of the channel 361 is in communication with the first space S1, and the second port 362b of the channel 362 is in communication with the second space S2.

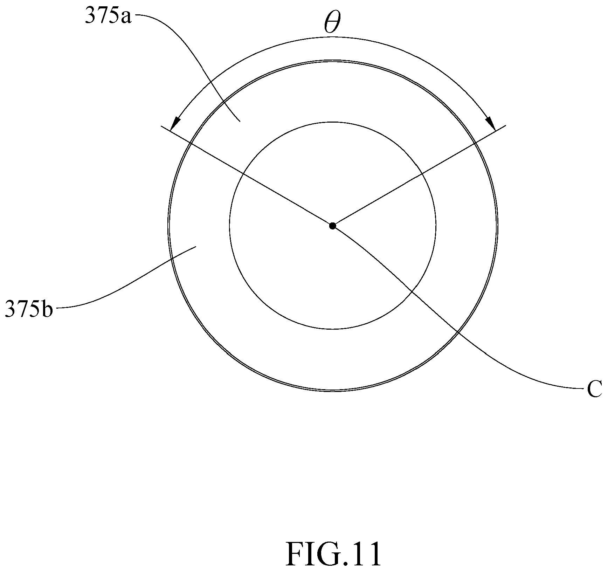

In addition, the movable cylinder 37 has an annular top surface 375 with a difference in height and an undulation on a top surface of the liftable base 371. As shown in FIG. 10 and FIG. 11, the annular top surface 375 has a center C as a vertex, wherein a range of a central angle θ that ranges between 90 degrees and 150 degrees is defined as a low section 375a, and a portion of the annular top surface 375 other than the low section 375a is a high section 375b. In the current embodiment, the central angle θ is 120 degrees as an example, wherein the low section 375a is a curved surface that is gradually recessed from a junction between the low section 375a and the high section 375b to a central portion of the low section 375a, and the high section 375b is a flat surface; the central portion of the curved surface (i.e., the central angle θ is equal to 60 degrees) that constitutes the low section 375a is a lowest point relative to the flat surface that constitutes the high section 375b.

As shown in FIG. 8, the supporting tube 38 is a cylindrical tube, wherein a tube body of the supporting tube 38 has a shoulder 38a that protrudes. A bottom of the supporting tube 38 forms an outer flange 38b, and a plurality of perforations 38c are provided on the outer flange 38b. The guiding disk 39 has a hollow portion 39a for sleeving the supporting tube 38. The guiding disk 39 is provided with a plurality of through holes 39b on an outer periphery of the hollow portion 39a of the guiding disk 39. The guiding disk 39 has two wings 39c extending outward, wherein each of the wings 39c is provided with one perforation 39d. During assembling, the guiding disk 39 is first placed between the shaft tube 36 and the supporting tube 38, then an end of each of a plurality of screws 41 that is in a long rod shape sequentially passes through the through holes 36a of the shaft tube 36, the through holes 39b of the guiding disk 39, and the perforations 38c of the supporting tube 38 to be screwed into the body 10, so that the shaft tube 36 and the supporting tube 38 are connected to the body 10 and are stationary. As the screws 41 are tightened, the bottom of the shaft tube 36 is forced to urges the guiding disk 39 to tightly abut against the outer flange 38b, so that the guiding disk 39 would not rotate. In addition, two screws 42 pass through the perforations 39d of the guiding disk 39 and then are screwed into two guiding rods 43, wherein each of the guiding rods 43 passes through each of through holes 373b of the guiding cover 373, thereby achieving the purpose of preventing the movable cylinder 37 from improperly rotating relative to the shaft tube 36.

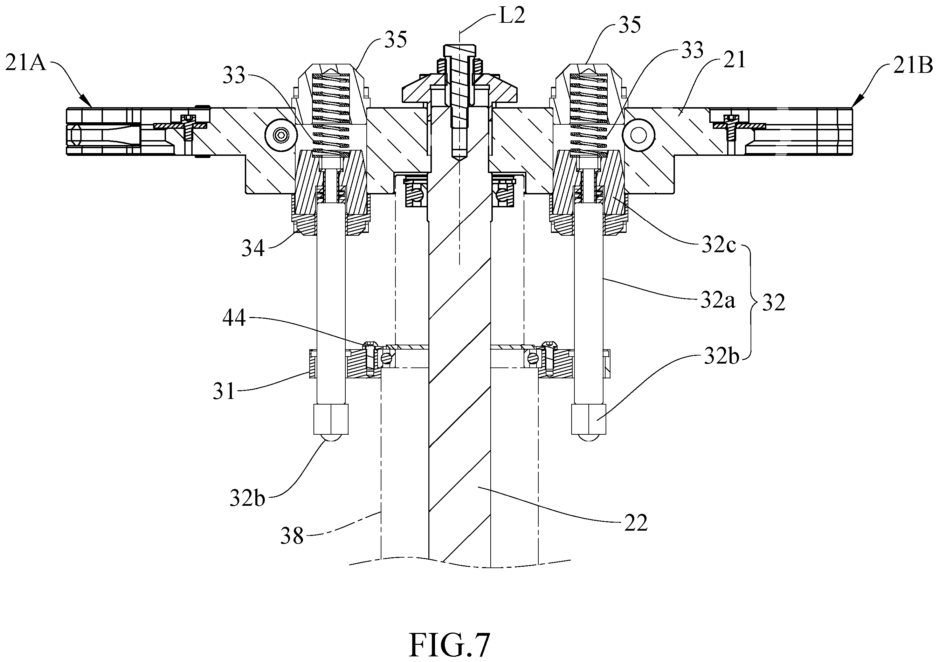

In the above description, after assembling, the supporting tube 38 sleeves the rotating shaft 22, and the bottom of the supporting tube 38 is fixedly connected to the body 10, and a top of the supporting tube 38 is located close to the arm 21 without interfering the rotation of the arm 21. The shaft tube 36 sleeves the supporting tube 38. The movable cylinder 37 sleeves the shaft tube 36 in a manner of being movable, but not rotatable, relative to the shaft tube 36. The two detent rods 32 are located between the arm 21 and the liftable base 371 of the movable cylinder 37. In addition, a bearing 44 (shown in FIG. 7) is disposed between the shoulder 38a of the supporting tube 38 and the rotary table 31 in a sleeving manner, thereby achieving the purpose of maintaining the rotary table 31 at a same height position and rotatable with the rotating shaft 22 as a center.

The tool changing mechanism 100 of the current embodiment is controllable to pivot between the vertical position PV (shown in FIG. 2) and the horizontal position PH (shown in FIG. 3) when the tool changing mechanism 100 is applied to the vertical and horizontal dual-purpose machining apparatus. The linkage relationship between the tool changing arm 20 and the detent unit 30 of the tool changing mechanism 100 will be illustrated when the tool changing mechanism 100 is applied to a vertical machining process and a horizontal machining process as examples.

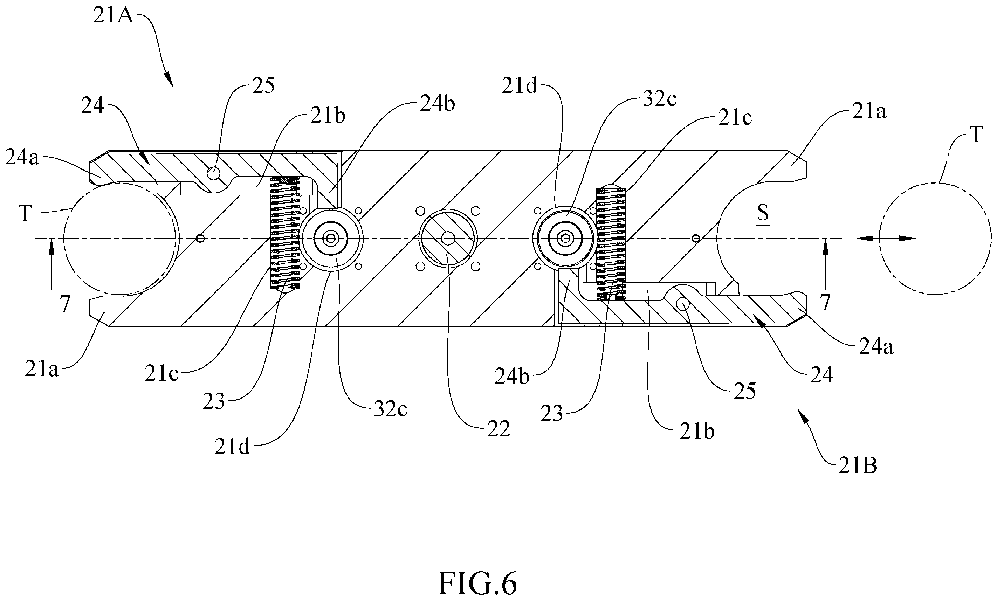

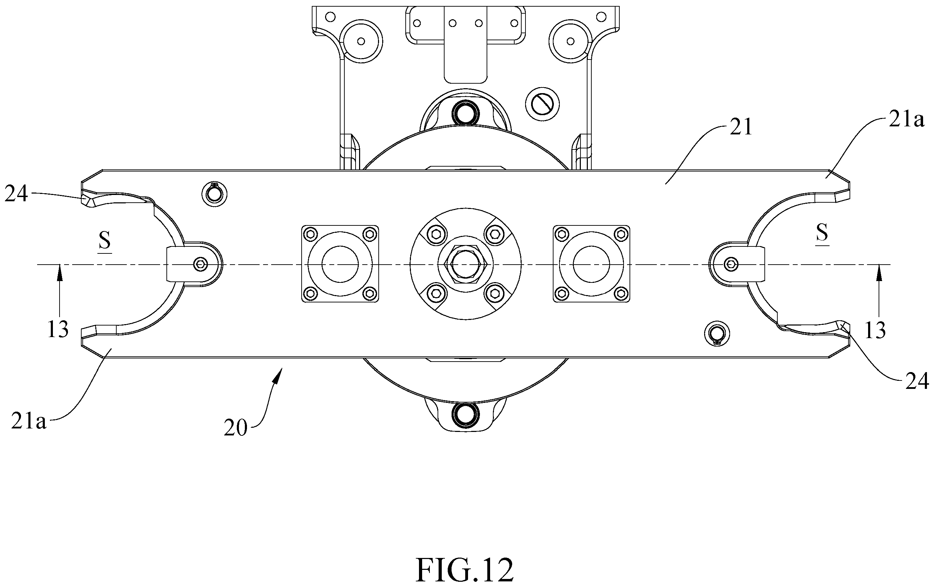

Firstly, FIG. 2 and FIG. 12 to FIG. 14 show that the tool changing mechanism 100 is applied to vertical machining and is in the vertical position PV. In the vertical machining process, in order to enable the tool clamping portions 21A, 21B of the arm 21 to smoothly grasp a tool shank T that is vertically disposed, the movable cylinder 37 is required to be controlled to remain on a side that is relatively away from the arm 21, so that when the two detent rods 32 are pushed downward by the restoring members 33, the detent rods 32 could have a sufficient room to move downward to drive the detent blocks 32c leaving a swinging path of the clamping member 24, thus ensuring that the clamping member 24 could have a swinging room for the tool shank T to enter and exit the clamping space S. The movable cylinder 37 in the aforementioned state is located in a first position P1. At this time, although the clamping member 24 is subjected to the elastic force of the elastic member 23, the clamping member 24 still remains in a swingable state (shown in FIG. 6). Hereby, after the tool shank T enters the clamping space S, the tool shank T is supported by the tool clamping plate 21a and the clamping member 24 without dropping due to the weight of the tool shank T, and the clamping member 24 is continuously subjected to the elastic force of the elastic member 23, which causes the tool-abutting end 24a of the clamping member 24 to lean toward the tool clamping plate 21a and clamp the tool shank T together with the tool clamping plate 21a. As the elastic force of the elastic member 23 is set to be greater than a centrifugal force on the tool shank T caused by the rotation of the arm 21, the tool shank T could be effectively retained between the tool clamping plate 21a and the clamping member 24. When the tool shank T is translated to enter or exit the clamping space S and touches the tool-abutting end 24a, the clamping member 24 deflects and compresses and deforms the elastic member 23, so that the tool shank T could enter and exit the clamping space S smoothly.

In the above description, in order to ensure that the detent block 32c at the another end of the detent rod 32 does not interfere the swinging of the clamping member 24, it is preferred that a fixed position to which the movable cylinder 37 moves downward is set such that the connector 32b of the detent rod 32 does not touch the annular top surface 375 of the movable cylinder 37. However, as the tool changing mechanism 100 is also applicable to the horizontal machining process, the first position P1 of the movable cylinder 37 of the current embodiment is set at a position as shown in FIG. 13, and the high section 375b of the annular top surface 375 of the movable cylinder 37 is kept on a side the same as a rotation direction of the tool changing mechanism 100. Taking FIG. 13 as an example, when the tool changing mechanism 100 rotates leftward, the high section 375b of the annular top surface 375 is designed to be on a left side. Furthermore, in order to illustrate easily, the two detent rods 31 are hereinafter referred to a first detent rod 32A and a second detent rod 32B, respectively. Therefore, when the movable cylinder 37 is in the first position P1, the high section 375b of the annular top surface 375 is just in contact with the connector 32b of the first detent rod 32A, while the low section 375a of the annular top surface 375 is not in contact with the connector 32b of the second detent rod 32B. In addition, in the current embodiment, the movable cylinder 37 is controlled to move to the first position P1 by injecting high-pressure gas into the first space S1 along the channel 361 (and at the same time, gas in the second space S2 is discharged along the channel 362). On the basis that the shaft tube 36 is stationary, when an internal pressure of the first space S1 is greater than an internal pressure of the second space S2, the movable cylinder 37 is pushed by the high-pressure gas to move downward and remains in the first position P1.

When the tool changing mechanism 100 is about to be applied to a tool changing process in the horizontal machining process, the tool changing mechanism 100 leaves the tool magazine in a state where the tool changing mechanism 100 remains in the vertical position PV. When the tool changing mechanism 100 approaches the spindle of the machining apparatus, the movable cylinder 37 of the detent unit 30 is firstly controlled to move to a fixed point in a direction towards the arm 21, and the tool changing mechanism 100 is then controlled to pivot to the horizontal position PH (shown in FIG. 3). The fixed point to which the movable cylinder 37 moves in the direction towards the arm 21 is defined as a second position P2 (shown in FIG. 15). The way to control the movable cylinder 37 to move to the second position P2 is similar to the aforementioned way, i.e., pushing the movable cylinder 37 through the input of the high-pressure gas. The difference is that at this point, the high-pressure gas is injected into the second space S2 along the channel 362 (and at the same time, gas in the first space S1 is discharged along the channel 361). On the basis that the shaft tube 36 is stationary, when the internal pressure of the second space S2 is greater than the internal pressure of the first space S1, the movable cylinder 37 is pushed by the high-pressure gas to move upward and remains in the second position P2.

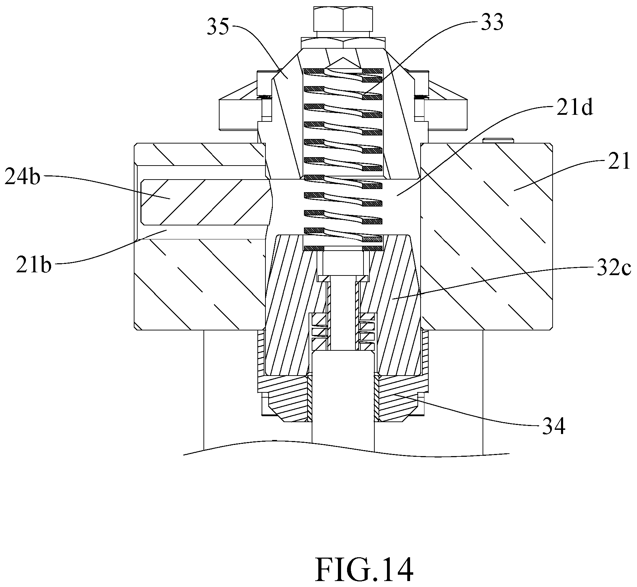

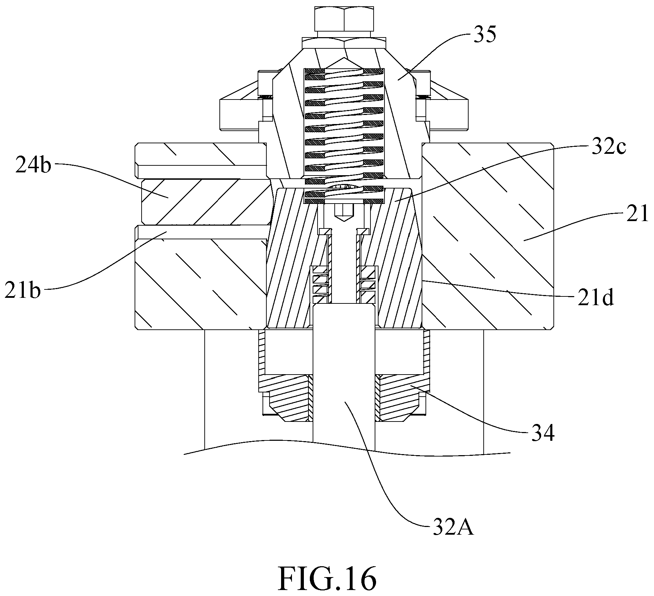

The low section 375a and the high section 375b of the annular top surface 375 have different heights, so that when the movable cylinder 37 moves upward, the high section 375b of the annular top surface 375 continuously pushes the first detent rod 32A to move the first detent rod 32A upward. When the detent block 32c of the first detent rod 32A contacts the actuating end 24b (shown in FIG. 16), the clamping member 24 could not swing, so that the tool-abutting end 24a of the clamping member 24 and the tool clamping plate 21a jointly clamp the tool shank T in a stable manner, thereby achieving the purpose of locking the tool shank T; at the same time, the low section 375a is just in contact with the connector 32b of the second detent rod 32B without pushing and moving the second detent rod 32B upward; therefore, the detent block 32c of the second detent rod 32B is still subjected to the pushing force of the restoring member 33 to remain in the state where the detent block 32c of the second detent rod 32B does not contact the actuating end 24b as shown in FIG. 14. At this time, although the detent block 32c of the second detent rod 32B does not interfere the swinging of the clamping member 24, the clamping member 24 is still subjected to the elastic force of the elastic member 23 to fasten the tool shank T.

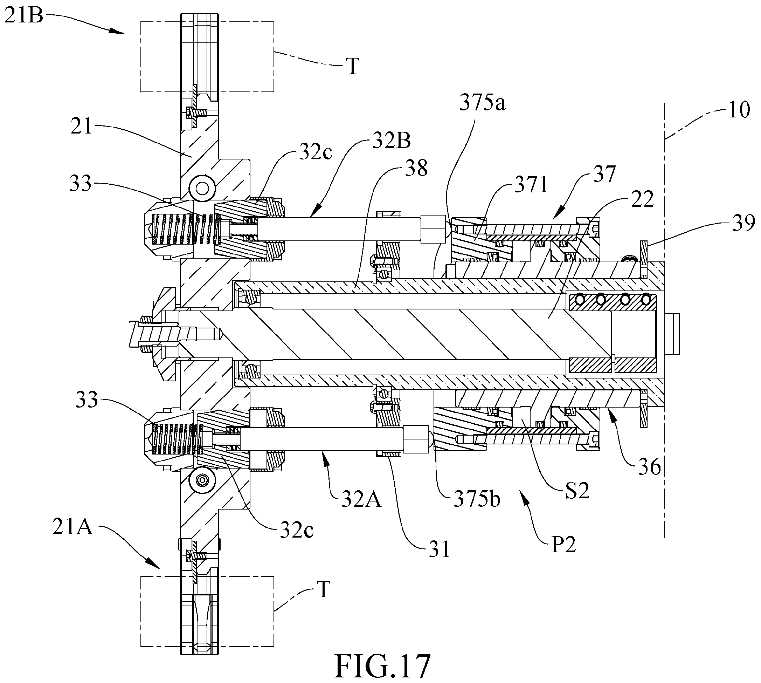

After the movable cylinder 37 reaches the second position P2, the tool changing mechanism 100 is controlled to pivot to the horizontal position PH. Referring to FIG. 17, at this time, the opening of the tool clamping portion 21A, which is located at a lower position, of the arm 21 faces downwards, but the clamping member 24 of the tool clamping portion 21A is urged by the first detent rod 32A to lock the tool shank T that is horizontally disposed, thereby preventing the tool shank T from being loosened relative to the tool clamping portion 21A; at the same time, the opening of the tool clamping portion 21B, which is located at an upper position, of the arm 21 faces upwards, thereby facilitating the tool shank T on the spindle of the machining apparatus to be disposed in the opening of the tool clamping portion 21B; the tool shank T disposed in the tool clamping portion 21B is supported by the tool clamping portion 21B without dropping due to the weight of the tool shank T, and at the same time, the tool shank T is kept in a stable state by the elastic force of the elastic member 23 of the tool clamping portion 21B.

When the arm 21 is controlled to rotate 180 degrees to perform a tool changing process, the first detent rod 32A and the second detent rod 32B rotate around the rotating shaft 22 in a circular trajectory along with the rotation of the arm 21, so that the abutting ends (i.e., the connectors 32b) of the first detent rod 32A and the second detent rod 32B always remain in contact with the annular top surface 375 due to the pushing forces of the two restoring members 33. During a process of changing the tool clamping portion 21A located at the lower position to the upper position (the tool clamping portion 21B which is originally located at the upper position is changed to the lower position), a position of the first detent rod 32A and a position of the second detent rod 32B are synchronously swapped, i.e., the abutting end of the first detent rod 32A slides into the low section 375a along the high section 375b to gradually loosen the tool clamping portion 21A, while the abutting end of the second detent rod 32B moves from the lowest point of the low section 375a towards the high section 375b to gradually lock the tool clamping portion 21B. Therefore, based on the aforementioned structural relationship, when the arm 21 is rotated, the tool clamping portion 21A and the tool clamping portion 21B of the arm 21 could timely loosen and lock the horizontally disposed tool shanks T, thereby ensuring the smoothness of the tool changing process.

With the aforementioned design, when the tool changing mechanism 100 of the current embodiment is applied to the vertical and horizontal dual-purpose machining apparatus, the locking process and the loosening process of the tool shanks T could be effectively performed regardless of the vertical machining process or the horizontal machining process. In addition, in the current embodiment, the movable cylinder 37 is controlled to move between the first position P1 and the second position P2 by adopting pneumatic control, which is environmentally friendly. Alternatively, hydraulic pressure control could be used depending on the circumstances. In addition, bearings or seals could be provided among different components of the tool changing arm 20 and different components of the detent unit 30 to meet different requirements, thereby ensuring a smoothness of the components during operation and a good sealing effect. It is further noted that the clamping member 24 of the aforementioned embodiment is designed to be swingable; however, in practice, the clamping member could also be designed to be able to move back and forth in a straight direction in order to realize the purpose of locking and loosening the tool.

## Claims

1. A tool changing mechanism (100) for a machining apparatus, comprising:
a body (10);
a tool changing arm (20), including an arm (21) and a rotating shaft (22), wherein the arm (21) has two different ends; two tool clamping assemblies are respectively provided at the two ends of the arm (21); each of the two tool clamping assemblies includes at least one clamping member (24); the at least one clamping member (24) has two ends respectively constituting an actuating end (24b) and a tool-abutting end (24a); an end of the rotating shaft (22) is connected to the arm (21), and another end of the rotating shaft (22) penetrates through the body (10); the rotating shaft (22) is controllable to drive the arm (21) to rotate around a centerline (L2);
a detent unit (30), including a movable cylinder (37) and two detent rods (32), wherein the movable cylinder (37) sleeves the rotating shaft (22) and is movable along the centerline (L2) between a first position (P1) and a second position (P2); the movable cylinder (37) has an annular top surface (375), wherein the annular top surface (375) is divided into a high section (375b) and a low section (375a) located lower in height than the high section (375b); the two detent rods (32) are disposed on an outer side of the rotating shaft (22) in a manner that the two detent rods (32) are movable in parallel to the centerline (L2); the two detent rods (32) are rotatable around the rotating shaft (22) along with the rotation of the arm (21); each of the two detent rods (32) has two ends respectively constituting an abutting end and a pushing end;
wherein when the movable cylinder (37) is in the first position (P1), the abutting end of at least one of the two detent rods (32) does not contact the annular top surface (375); when the movable cylinder (37) is in the second position (P2), the abutting end of one of the two detent rods (32) contacts the high section (375b) of the annular top surface (375) and the pushing end of the detent rod (32) pushes against the actuating end (24b) of the at least one clamping member (24) of one of the two tool clamping assemblies, and the abutting end of the other detent rod (32) contacts the low section (375a) of the annular top surface (375) and the pushing end of the other detent rod (32) does not push against the actuating end (24b) of the at least one clamping member (24) of the other tool clamping assembly.

2. The tool changing mechanism (100) as claimed in claim 1, wherein the at least one clamping member (24) of each of the two tool clamping assemblies of the tool changing arm (20) is swingable around a fulcrum; when the movable cylinder (37) is in the first position (P1), the abutting end of one of the two detent rods (32) contacts the high section (375b) of the annular top surface (375), and the abutting end of the other detent rod (32) does not contact the low section (375a) of the annular top surface (375); when the movable cylinder (37) is in the second position (P2), the pushing end of the detent rod (32), which contacts the high section (375b), causes the at least one clamping member (24) of one of the two tool clamping assemblies to be in a non-swingable state, and the pushing end of the other detent rod (32), which contacts the low section (375a), causes the at least one clamping member (24) of the other tool clamping assembly to be in a swingable state.

3. The tool changing mechanism (100) as claimed in claim 2, wherein the detent unit (30) includes a shaft tube (36); the shaft tube (36) sleeves the rotating shaft (22) and is fixedly connected to the body (10); the movable cylinder (37) sleeves the shaft tube (36); an annular protrusion (36b) is formed by protruding radially from an outer peripheral surface of the shaft tube (36); an internal space of the movable cylinder (37) is divided by the annular protrusion (36b) into a first space (S1) and a second space (S2) that do not communicate with each other; when an internal pressure of the first space (S1) is greater than an internal pressure of the second space (S2), the moveable cylinder (37) is in the first position (P1); when the internal pressure of the second space (S2) is greater than the internal pressure of the first space (S1), the movable cylinder (37) is in the second position (P2).

4. The tool changing mechanism (100) as claimed in claim 3, wherein the movable cylinder (37) sleeves the shaft tube (36) in a non-rotatable manner; two channels (361, 362) are provided inside the shaft tube (36), wherein each of the two channels (361, 362) has a first port (361a, 362a) for communicating with an external pressure source; each of the two channels (361, 362) has a second port (361b, 362b), wherein the second port (361b) of one of the two channels (361) communicates with the first space (S1), and the second port (362b) of the other channel (362) communicates with the second space (S2).

5. The tool changing mechanism (100) as claimed in claim 3, wherein the detent unit (30) includes a supporting tube (38); the supporting tube (38) sleeves the rotating shaft (22), wherein an end of the supporting tube (38) is fixedly connected to the body (10), and another end of the supporting tube (38) is connected to the arm (21) in a manner that the arm (21) is rotatable relative to the supporting tube (38); the shaft tube (36) sleeves the supporting tube (38) and is fixedly connected to the supporting tube (38).

6. The tool changing mechanism (100) as claimed in claim 2, wherein each of the two tool clamping assemblies includes an elastic member (23) and a shaft pin (25); the elastic member (23) is provided inside the arm (21); the shaft pin (25) penetrates through the at least one clamping member (24); the at least one clamping member (24) is swingable around the shaft pin (25) as the fulcrum; an elastic force provided by the elastic member (23) acts on the at least one clamping member (24), so that the tool-abutting end (24a) of the at least one clamping member (24) maintains moving in a predetermined direction.

7. The tool changing mechanism (100) as claimed in claim 6, wherein each of the two ends of the arm (21) is provided with at least one lateral groove (21b), an accommodating hole (21c), and a penetrating hole (21d); the at least one clamping member (24) is disposed in the at least one lateral groove (21b); the elastic member (23) is disposed in the accommodating hole (21c); the two pushing ends of the two detent rods (32) respectively protrude into the two penetrating holes (21d); the detent unit (30) includes two restoring members (33) respectively disposed in the two penetrating holes (21d) of the two ends of the arm (21), wherein a pushing force provided by each of the two restoring members (33) acts on the pushing end of each of the two detent rods (32), so that each of the two detent rods (32) maintains moving in a direction towards the movable cylinder (37).

8. The tool changing mechanism (100) as claimed in claim 1, wherein the detent unit (30) includes a rotary table (31); the rotary table (31) sleeves the rotating shaft (22) in a manner that the rotary table (31) maintains at a same height position; the rotary table (31) is rotatable around the rotating shaft (22); the two detent rods (32) pass through the rotary table (31) respectively, wherein the abutting end and the pushing end of each of the two detent rods (32) are respectively located on two sides of the rotary table (31).

9. The tool changing mechanism (100) as claimed in claim 1, wherein the high section (375b) of the annular top surface (375) of the movable cylinder (37) is a flat surface, and the low section (375a) of the annular top surface (375) is a curved surface that is gradually recessed.

10. The tool changing mechanism (100) as claimed in claim 9, wherein a center (C) is defined on the movable cylinder (37); the low section (375a) of the annular top surface (375) is in a range of a central angle (θ), wherein the central angle (θ) is between 90 degrees and 150 degrees.

## Patentansprüche

1. - Werkzeugwechselmechanismus (100) für eine Bearbeitungsvorrichtung, umfassend:
einen Körper (10);
einen Werkzeugwechselarm (20), der einen Arm (21) und eine Drehwelle (22) beinhaltet, wobei der Arm (21) zwei verschiedene Enden aufweist; zwei Werkzeugspannanordnungen, die jeweils an den zwei Enden des Arms (21) bereitgestellt sind; jede der zwei Werkzeugspannanordnungen mindestens ein Spannelement (24) beinhaltet; das mindestens eine Spannelement (24) zwei Enden aufweist, die jeweils ein Betätigungsende (24b) und ein werkzeuganliegendes Ende (24a) darstellen; ein Ende der Drehwelle (22) mit dem Arm (21) verbunden ist und ein anderes Ende der Drehwelle (22) den Körper (10) durchdringt; die Drehwelle (22) steuerbar ist, um den Arm (21) zum Drehen um eine Mittellinie (L2) anzutreiben;
eine Rasteinheit (30), die einen bewegbaren Zylinder (37) und zwei Raststangen (32) beinhaltet, wobei der bewegbare Zylinder (37) die Drehwelle (22) ummantelt und entlang der Mittellinie (L2) zwischen einer ersten Position (P1) und einer zweiten Position (P2) bewegbar ist; der bewegbare Zylinder (37) eine ringförmige obere Fläche (375) aufweist, wobei die ringförmige obere Fläche (375) in einen hohen Abschnitt (375b) und einen niedrigen Abschnitt (375a), der sich in der Höhe niedriger als der hohe Abschnitt (375b) befindet, unterteilt ist; die zwei Raststangen (32) an einer Außenseite der Drehwelle (22) auf eine Weise angeordnet sind, dass die zwei Raststangen (32) parallel zu der Mittellinie (L2) bewegbar sind; die zwei Raststangen (32) zusammen mit der Drehung des Arms (21) um die Drehwelle (22) drehbar sind; jede der zwei Raststangen (32) zwei Enden aufweist, die jeweils ein Anschlag- und ein Druckende darstellen;
wobei, wenn der bewegbare Zylinder (37) in der ersten Position (P1) ist, das Anschlagende von mindestens einer der beiden Raststangen (32) die ringförmige obere Fläche (375) nicht berührt; wenn der bewegbare Zylinder (37) in der zweiten Position (P2) ist, das Anschlagende einer der zwei Raststangen (32) den hohen Abschnitt (375b) der ringförmigen Oberseite (375) berührt und das Druckende der Raststange (32) gegen das Betätigungsende (24b) des mindestens einen Spannelements (24) von einer der zwei Werkzeugspannanordnungen drückt, und das Anschlagende der anderen Raststange (32) den unteren Abschnitt (375a) der ringförmigen oberen Fläche (375) berührt und das Druckende der anderen Raststange (32) nicht gegen das Betätigungsende (24b) des mindestens einen Spannelements (24) der anderen Werkzeugspannanordnung drückt.

2. - Werkzeugwechselmechanismus (100) nach Anspruch 1, wobei das mindestens eine Spannelement (24) jeder der zwei Werkzeugspannanordnungen des Werkzeugwechselarms (20) um einen Drehpunkt schwenkbar ist; wenn der bewegbare Zylinder (37) in der ersten Position (P1) ist, das Anschlagende einer der zwei Raststangen (32) den hohen Abschnitt (375b) der ringförmigen oberen Fläche (375) berührt, und das Anschlagende der anderen Raststange (32) nicht den niedrigen Abschnitt (375a) der ringförmigen oberen Fläche (375) berührt; wenn der bewegbare Zylinder (37) in der zweiten Position (P2) ist, das Druckende der Raststange (32), das den hohen Abschnitt (375b) berührt, bewirkt, dass das mindestens eine Spannelement (24) einer der beiden Werkzeugspannanordnungen in einem nicht schwenkbaren Zustand ist, und das Druckende der anderen Raststange (32), das den niedrigen Abschnitt (375a) berührt, bewirkt, dass das mindestens eine Spannelement (24) der anderen Werkzeugspannanordnung in einem schwenkbaren Zustand ist.

3. - Werkzeugwechselmechanismus (100) nach Anspruch 2, wobei die Rasteinheit (30) ein Schaftrohr (36) beinhaltet; das Wellenrohr (36) die Drehwelle (22) ummantelt und fest mit dem Körper (10) verbunden ist; der bewegbare Zylinder (37) das Schaftrohr (36) ummantelt; ein ringförmiger Vorsprung (36b) gebildet wird, der radial von einer äußeren Umfangsfläche des Schaftrohrs (36) hervorsteht; ein Innenraum des bewegbaren Zylinders (37) durch den ringförmigen Vorsprung (36b) in einen ersten Raum (S1) und einen zweiten Raum (S2) unterteilt ist, die nicht miteinander in Verbindung sind; wenn ein Innendruck des ersten Raums (S1) größer ist als ein Innendruck des zweiten Raums (S2), der bewegbare Zylinder (37) in der ersten Position (P1) ist; wenn der Innendruck des zweiten Raums (S2) größer ist als der Innendruck des ersten Raums (S1), der bewegbare Zylinder (37) in der zweiten Position (P2) ist.

4. - Werkzeugwechselmechanismus (100) nach Anspruch 3, wobei der bewegbare Zylinder (37) das Schaftrohr (36) auf nicht drehende Weise ummantelt; im Inneren des Schaftrohrs (36) zwei Kanäle (361, 362) bereitgestellt sind, wobei jeder der zwei Kanäle (361, 362) einen ersten Anschluss (361a, 362a) zum Verbinden mit einer externen Druckquelle aufweist; jeder der zwei Kanäle (361, 362) einen zweiten Anschluss (361b, 362b) aufweist, wobei der zweite Anschluss (361b) von einem der zwei Kanäle (361) mit dem ersten Raum (S1) in Verbindung ist und der zweite Anschluss (362b) des anderen Kanals (362) mit dem zweiten Raum (S2) in Verbindung ist.

5. - Werkzeugwechselmechanismus (100) nach Anspruch 3, wobei die Rasteinheit (30) ein Trägerrohr (38) beinhaltet; das Trägerrohr (38) die Drehwelle (22) ummantelt, wobei ein Ende des Trägerrohrs (38) fest mit dem Körper (10) verbunden ist und ein anderes Ende des Trägerrohrs (38) auf eine Weise mit dem Arm (21) verbunden ist, sodass der Arm (21) in Bezug auf das Trägerrohr (38) drehbar ist; das Schaftrohr (36) das Trägerrohr (38) ummantelt und fest mit dem Trägerrohr (38) verbunden ist.

6. - Werkzeugwechselmechanismus (100) nach Anspruch 2, wobei jede der zwei Werkzeugspannanordnungen ein elastisches Element (23) und einen Schaftstift (25) beinhaltet; das elastische Element (23) im Inneren des Arms (21) bereitgestellt ist; der Schaftstift (25) das mindestens eine Spannelement (24) durchdringt; das mindestens eine Spannelement (24) um den Wellenzapfen (25) als Drehpunkt schwenkbar ist; auf das mindestens eine Spannelement (24) eine von dem elastischen Element (23) bereitgestellte elastische Kraft wirkt, sodass das werkzeuganliegende Ende (24a) des mindestens einen Spannelements (24) ein Bewegen in einer vorbestimmten Richtung beibehält.

7. - Werkzeugwechselmechanismus (100) nach Anspruch 6, wobei jedes der zwei Enden des Arms (21) mit mindestens einer seitlichen Nut (21b), einem Aufnahmeloch (21c) und einem Durchgangsloch (21d) versehen ist; das mindestens eine Spannelement (24) in der mindestens einen seitlichen Nut (21b) angeordnet ist; das elastische Element (23) in dem Aufnahmeloch (21c) angeordnet ist; die zwei Druckenden der zwei Raststangen (32) jeweils in die zwei Durchgangslöcher (21d) hervorstehen; die Rasteinheit (30) zwei Rückholelemente (33) beinhaltet, die jeweils in den zwei Durchgangslöchern (21d) der zwei Enden des Arms (21) angeordnet sind, wobei eine von jedem der zwei Rückholelemente (33) bereitgestellte Druckkraft auf das Druckende jeder der zwei Raststangen (32) wirkt, sodass jede der zwei Raststangen (32) ein Bewegen in Richtung des bewegbaren Zylinders (37) beibehält.

8. - Werkzeugwechselmechanismus (100) nach Anspruch 1, wobei die Rasteinheit (30) einen Drehtisch (31) beinhaltet; der Drehtisch (31) die Drehwelle (22) auf eine Weise ummantelt, dass der Drehtisch (31) in einer gleichen Höhenposition bleibt; der Drehtisch (31) um die Drehwelle (22) drehbar ist; die zwei Raststangen (32) jeweils durch den Drehtisch (31) verlaufen, wobei das Anschlagende und das Druckende jeder der zwei Raststangen (32) jeweils auf zwei Seiten des Drehtischs (31) angeordnet sind.

9. - Werkzeugwechselmechanismus (100) nach Anspruch 1, wobei der obere Abschnitt (375b) der ringförmigen oberen Fläche (375) des bewegbaren Zylinders (37) eine flache Fläche ist und der untere Abschnitt (375a) der ringförmigen oberen Fläche (375) eine gekrümmte Fläche ist, die allmählich zurückgesetzt ist.

10. - Werkzeugwechselmechanismus (100) nach Anspruch 9, wobei eine Mitte (C) an dem bewegbaren Zylinder (37) definiert ist; der untere Abschnitt (375a) der ringförmigen oberen Fläche (375) in einem Bereich eines mittleren Winkels (θ) ist, wobei der mittlere Winkel (θ) zwischen 90 Grad und 150 Grad ist.

## Revendications

1. - Mécanisme de changement d'outil (100) pour un appareil d'usinage, comprenant :
un corps (10) ;
un bras de changement d'outil (20), comprenant un bras (21) et un arbre rotatif (22), le bras (21) ayant deux extrémités différentes ; deux ensembles de serrage d'outil sont respectivement disposés aux deux extrémités du bras (21) ; chacun des deux ensembles de serrage d'outil comprend au moins un élément de serrage (24) ; l'au moins un élément de serrage (24) a deux extrémités constituant respectivement une extrémité d'actionnement (24b) et une extrémité de butée d'outil (24a) ; une extrémité de l'arbre rotatif (22) est reliée au bras (21), et une autre extrémité de l'arbre rotatif (22) pénètre à travers le corps (10) ; l'arbre rotatif (22) est apte à être commandé pour amener le bras (21) à tourner autour d'une ligne centrale (L2) ;
une unité de verrouillage (30), comprenant un cylindre mobile (37) et deux tiges de verrouillage (32), le cylindre mobile (37) enveloppant l'arbre rotatif (22) et étant déplaçable le long de l'axe central (L2) entre une première position (P1) et une seconde position (P2) ; le cylindre mobile (37) a une surface supérieure annulaire (375), la surface supérieure annulaire (375) étant divisée en une section haute (375b) et une section basse (375a) située à une hauteur inférieure à celle de la section haute (375b) ; les deux tiges de verrouillage (32) sont disposées sur un côté extérieur de l'arbre rotatif (22) d'une manière telle que les deux tiges de verrouillage (32) sont déplaçables parallèlement à la ligne central (L2) ; les deux tiges de verrouillage (32) sont aptes à tourner autour de l'arbre rotatif (22) conjointement avec la rotation du bras (21) ; chacune des deux tiges de verrouillage (32) a deux extrémités constituant respectivement une extrémité de butée et une extrémité de poussée ;
dans lequel, lorsque le cylindre mobile (37) est dans la première position (P1), l'extrémité de butée d'au moins l'une des deux tiges de verrouillage (32) n'est pas en contact avec la surface supérieure annulaire (375) ; lorsque le cylindre mobile (37) est dans la seconde position (P2), l'extrémité de butée de l'une des deux tiges de verrouillage (32) est en contact avec la section haute (375b) de la surface supérieure annulaire (375) et l'extrémité de poussée de la tige de verrouillage (32) pousse contre l'extrémité d'actionnement (24b) de l'au moins un élément de serrage (24) de l'un des deux ensembles de serrage d'outil, et l'extrémité de butée de l'autre tige de verrouillage (32) est en contact avec la section basse (375a) de la surface supérieure annulaire (375) et l'extrémité de poussée de l'autre tige de verrouillage (32) ne pousse pas contre l'extrémité d'actionnement (24b) de l'au moins un élément de serrage (24) de l'autre ensemble de serrage d'outil.

2. - Mécanisme de changement d'outil (100) selon la revendication 1, dans lequel l'au moins un élément de serrage (24) de chacun des deux ensembles de serrage d'outil du bras de changement d'outil (20) est apte à pivoter autour d'un point d'appui ; lorsque le cylindre mobile (37) est dans la première position (P1), l'extrémité de butée de l'une des deux tiges de verrouillage (32) est en contact avec la section haute (375b) de la surface supérieure annulaire (375), et l'extrémité de butée de l'autre tige de verrouillage (32) n'est pas en contact avec la section basse (375a) de la surface supérieure annulaire (375) ; lorsque le cylindre mobile (37) est dans la seconde position (P2), l'extrémité de poussée de la tige de verrouillage (32), qui est en contact avec la section haute (375b), amène l'au moins un élément de serrage (24) de l'un des deux ensembles de serrage d'outil à être dans un état non apte à pivoter, et l'extrémité de poussée de l'autre tige de verrouillage (32), qui est en contact avec la section basse (375a), amène l'au moins un élément de serrage (24) de l'autre ensemble de serrage d'outils à être dans un état apte à pivoter.

3. - Mécanisme de changement d'outil (100) selon la revendication 2, dans lequel l'unité de verrouillage (30) comprend un tube d'arbre (36) ; le tube d'arbre (36) enveloppe l'arbre rotatif (22) et est relié de manière fixe au corps (10) ; le cylindre mobile (37) enveloppe le tube d'arbre (36) ; une saillie annulaire (36b) est formée en faisant saillie radialement à partir d'une surface périphérique extérieure du tube d'arbre (36) ; un espace interne du cylindre mobile (37) est divisé par la saillie annulaire (36b) en un premier espace (S1) et un second espace (S2) qui ne communiquent pas entre eux ; lorsqu'une pression interne du premier espace (S1) est supérieure à une pression interne du second espace (S2), le cylindre mobile (37) est dans la première position (P1) ; lorsque la pression interne du second espace (S2) est supérieure à la pression interne du premier espace (S1), le cylindre mobile (37) est dans la seconde position (P2).

4. - Mécanisme de changement d'outil (100) selon la revendication 3, dans lequel le cylindre mobile (37) enveloppe le tube de l'arbre (36) de manière non rotative ; deux canaux (361, 362) sont prévus à l'intérieur du tube d'arbre (36), chacun des deux canaux (361, 362) ayant un premier orifice (361a, 362a) pour communiquer avec une source de pression externe ; chacun des deux canaux (361, 362) ayant un second orifice (361b, 362b), le second orifice (361b) de l'un des deux canaux (361) communiquant avec le premier espace (S1), et le second orifice (362b) de l'autre canal (362) communiquant avec le second espace (S2).

5. - Mécanisme de changement d'outil (100) selon la revendication 3, dans lequel l'unité de verrouillage (30) comprend un tube de support (38) ; le tube de support (38) enveloppe l'arbre rotatif (22), une extrémité du tube de support (38) étant reliée de manière fixe au corps (10), et une autre extrémité du tube de support (38) étant reliée au bras (21) d'une manière telle que le bras (21) est apte à tourner par rapport au tube de support (38) ; le tube d'arbre (36) enveloppe le tube de support (38) et est relié de manière fixe au tube de support (38).

6. - Mécanisme de changement d'outil (100) selon la revendication 2, dans lequel chacun des deux ensembles de serrage d'outil comprend un élément élastique (23) et une broche d'arbre (25) ; l'élément élastique (23) est placé à l'intérieur du bras (21) ; la broche d'arbre (25) pénètre à travers l'au moins un élément de serrage (24) ; l'au moins un élément de serrage (24) est apte à pivoter autour de la broche d'arbre (25) en tant que point d'appui ; une force élastique fournie par l'élément élastique (23) agit sur l'au moins un élément de serrage (24), de telle sorte que l'extrémité de butée d'outil (24a) de l'au moins un élément de serrage (24) continue à se déplacer dans une direction prédéterminée.

7. - Mécanisme de changement d'outil (100) selon la revendication 6, dans lequel chacune des deux extrémités du bras (21) comporte d'au moins une rainure latérale (21b), un trou de logement (21c) et un trou de pénétration (21d) ; l'au moins un élément de serrage (24) est disposé dans l'au moins une rainure latérale (21b) ; l'élément élastique (23) est disposé dans le trou de logement (21c) ; les deux extrémités de poussée des deux tiges de verrouillage (32) font respectivement saillie dans les deux trous de pénétration (21d) ; l'unité de verrouillage (30) comprend deux éléments de rappel (33) respectivement disposés dans les deux trous de pénétration (21d) des deux extrémités du bras (21), une force de poussée fournie par chacun des deux éléments de rappel (33) agissant sur l'extrémité de poussée de chacune des deux tiges de verrouillage (32), de telle sorte que chacune des deux tiges de verrouillage (32) continue à se déplacer dans une direction vers le cylindre mobile (37).

8. - Mécanisme de changement d'outil (100) selon la revendication 1, dans lequel l'unité de verrouillage (30) comprend une table rotative (31) ; la table rotative (31) enveloppe l'arbre rotatif (22) d'une manière telle que la table rotative (31) se maintient à une même position en hauteur ; la table rotative (31) est apte à tourner autour de l'arbre rotatif (22) ; les deux tiges de verrouillage (32) passent chacune à travers la table rotative (31), l'extrémité de butée et l'extrémité de poussée de chacune des deux tiges de verrouillage (32) étant respectivement situées sur deux côtés de la table rotative (31).

9. - Mécanisme de changement d'outil (100) selon la revendication 1, dans lequel la section haute (375b) de la surface supérieure annulaire (375) du cylindre mobile (37) est une surface plane, et la section basse (375a) de la surface supérieure annulaire (375) est une surface incurvée qui est progressivement en retrait.

10. - Mécanisme de changement d'outil (100) selon la revendication 9, dans lequel un centre (C) est défini sur le cylindre mobile (37) ; la section basse (375a) de la surface supérieure annulaire (375) est dans une plage d'un angle central (θ), l'angle central (θ) étant entre 90 degrés et 150 degrés.
